# FASCICULE DE BREVET EUROPEEN

(11) **EP 3 562 693 B1**
(45) Date de publication et mention de la délivrance du brevet: **03.02.2021**
(21) Numéro de dépôt: 17822389.7
(22) Date de dépôt: 08.12.2017
(51) Int. Cl.: B60C 13/02, B60C 11/01

(54) **PNEUMATIQUE COMPORTANT DES BARRETTES DE FLANC A HAUTEUR VARIABLE**
REIFEN MIT UNTERSCHIEDLICH HOHEN SEITENWANDVORSPRÜNGEN
TYRE WITH VARIABLE-HEIGHT SIDEWALL LUGS

(30) Priorité: 27.12.2016 FR 1670793
(43) Date de publication de la demande: 06.11.2019
(73) Titulaire: Compagnie Générale des Etablissements Michelin, 63000 Clermont-Ferrand (FR)
(72) Inventeur: MUHLHOFF, Olivier, 63040 Clermont-Ferrand Cedex 9 (FR); CHAYLARD, Yann, 63040 Clermont-Ferrand Cedex 9 (FR); FERIGO, Hervé, 63040 Clermont-Ferrand Cedex 9 (FR); VALLENCE, Frédéric, 63040 Clermont-Ferrand Cedex 9 (FR); VANDAELE, Mathieu, 63040 Clermont-Ferrand Cedex 9 (FR)
(74) Mandataire: Demaure, Pierre-Yves
(86) Numéro de dépôt international: PCT/FR2017/053466
(87) Numéro de publication internationale: WO 2018/122485

(56) Documents cités:
- EP-A1- 2 808 181
- WO-A1-2014/207093

## Description

### DOMAINE DE L'INVENTION

La présente invention concerne un pneumatique pour véhicule automobile comportant une pluralité de barrettes de gomme sur au moins un flanc.

### ETAT DE LA TECHNIQUE

Il est connu du document WO2014/207093 de pourvoir au moins un flanc d'un pneumatique avec une pluralité de barrettes de gomme. Les barrettes de gomme sont réalisées par moulage lors d'une étape de cuisson du pneumatique. Elles sont ainsi obtenues de la même manière que les sculptures sur la bande de roulement du pneumatique. Ces barrettes de gomme permettent d'améliorer la robustesse du flanc vis-à-vis des chocs latéraux, sans pour autant changer fondamentalement les dimensions de ce flanc.

Les barrettes de gomme sur le flanc du pneumatique créent une alternance de creux et de bosses sur le flanc du pneumatique. Au cours d'un roulage, cette alternance de creux et de bosses peut provoquer une excitation de la structure du pneumatique. A certaines vitesses de roulage, cette excitation génère des vibrations et donc du bruit auquel est sensible le conducteur du véhicule ou une personne externe à ce véhicule.

Il existe donc un besoin de proposer un pneumatique avec des flancs renforcés présentant une grande résistance mécanique tout en limitant les nuisances sonores générées par ce pneumatique lors des roulages.

### EXPOSE DE L'INVENTION

Pour ce faire, l'invention prévoit un pneumatique en matériau caoutchoutique comprenant une bande de roulement, un premier flanc et un second flanc prolongeant ladite bande de roulement selon un profil externe de flanc, les flancs comportant une pluralité de zones de creux séparées par des barrettes en matériau caoutchoutique, les barrettes et les creux étant disposés les uns à la suite des autres dans la circonférence du pneumatique, lesdites barrettes ne dépassant pas le profil externe de flanc, lesdites barrettes ayant au moins une hauteur de 3 mm et au plus de 10 mm, la hauteur de tout ou partie des barrettes du premier flanc est différente de la hauteur de tout ou partie des barrettes du second flanc, ou la hauteur moyenne de tout ou partie des barrettes du premier flanc est différente de la hauteur moyenne de tout ou partie des barrettes du second flanc.

Grâce à une telle architecture, les amplitudes d'excitation des flancs sont différentes, ainsi que les fréquences de résonnance des flancs, procurant une atténuation des vibrations solidiennes et sonores susceptibles d'être transmises à l'habitacle.

Selon un mode de réalisation avantageux, la hauteur ou hauteur moyenn des barrettes du premier flanc diffère d'au moins 10% et au plus de 50% et plus préférentiellement d'au moins 20% et au plus de 35% de la hauteur ou hauteur moyenne des barrettes du second flanc.

De manière avantageuse, les barrettes ont une hauteur ou hauteur moyenne comprise en 4 mm et 8 mm.

Selon un autre mode de réalisation avantageux, la bande de roulement comprenant une pluralité de motifs agencés circonférentiellement, le nombre de motifs par tour de ladite bande de roulement est différent du nombre de barrettes d'au moins un des flancs.

On assure ainsi un découplage entre les fréquences générées par la bande de roulement et celles des flancs, contribuant à réduire davantage le niveau global des vibrations.

De manière avantageuse, le nombre de motifs par tour de la sculpture de bande de roulement n'est pas un multiple ou un sous-multiple du nombre de barrettes de chacun des flancs.

Selon encore un mode de réalisation avantageux, au moins deux barrettes d'un même flanc ont une hauteur ou hauteur moyenne différente.

Egalement de manière avantageuse, les barrettes présentent une inclinaison par rapport à une direction radiale (Z).

Selon une variante avantageuse, cette inclinaison des barrettes est différente d'un flanc à l'autre.

On ajoute ainsi une autre caractéristique contribuant à la réduction des vibrations.

Selon encore un mode de réalisation, les barrettes sont organisées dans la circonférence du pneumatique en au moins deux séries de barrettes, au moins deux séries de barrettes comprenant au moins deux pas (P1, P2) différents.

On ajoute encore une autre caractéristique contribuant à la réduction des vibrations.

De manière avantageuse, les barrettes sont disposées entre un point A et un point E,
- ledit point A étant disposé à l'intersection de la surface radialement extérieure de la bande de roulement et du flanc, et d'un axe radial ZZ' distant du plan équatorial d'une longueur L_{A} comprise entre ½ (L-60mm) et ½ (L-10mm), L étant la grosseur boudin nominale, et
- ledit point E étant disposé, au choix, dans un rayon compris dans :
   ∘ R₂ < E < (0,75 R₁ + 0,25R₂), R₂ étant le rayon du haut du crochet de jante et R₁ étant le rayon de la grosseur boudin nominal, ou dans
   ∘ 0,95R₁ < E < (0,75R_{A} + 0,25 R₁), R₁ étant le rayon de la grosseur boudin nominal, et R_{A} étant le rayon du point A.

Tout ou partie des barrettes est préférablement interrompue par un sillon circonférentiel, ledit sillon s'étendant entre une zone de largeur maximale du flanc et la bande de roulement.

La présence du sillon circonférentiel permet d'enlever de la matière et ainsi d'alléger le pneumatique. il permet aussi de découpler mécaniquement la zone sommet du pneu de la zone flanc et permet ainsi de diminuer les vibrations.

Les barrettes peuvent être présentes sur toute la longueur circonférentielle du flanc du pneumatique.

Les barrettes présentes sur les flancs sont constituées en un matériau de préférence identique à celui des flancs.

L'invention prévoit également un ensemble monté comprenant une jante et un pneumatique tel que défini selon l'une des revendications précédentes.

### DESCRIPTION DES FIGURES

L'invention va maintenant être décrite à l'aide des exemples et des dessins qui suivent et qui sont donnés uniquement à titre d'illustration, et sur lesquels :
- la figure 1A représente, de manière schématique, une coupe dans un plan radial d'un pneumatique monté sur une jante ;
- les figures 1B et 1C représentent, de manière schématique, des coupes le long des flancs d'un pneumatique pour mettre en évidence des exemples de profils des barrettes de flancs ;
- les figures 2A, 2B et 2C représentent, de manière schématique et en trois dimensions, une portion d'un flanc et de la bande de roulement correspondante d'exemples des pneumatiques ;
- la figure 3 représente, de manière schématique, une portion agrandie d'un flanc comprenant des barrettes ;
- la figure 4 représente une vue en coupe, de deux barrettes adjacentes, selon l'axe AA de la figure 3 ;
- les figures 5A et 5B représentent, selon une première variante, une portion d'une partie radialement extérieure d'un flanc et la bande de roulement correspondante en trois dimensions ;
- la figure 6 est une représentation schématique d'une coupe de pneumatique montrant deux positions angulaires de barrettes en opposition sur chacun des flancs du pneumatique.

### DESCRIPTION DETAILLEE DE L'INVENTION

### DEFINITIONS

On dénomme ci-après par :
- « direction longitudinale ou circonférentielle » : direction de roulement du pneumatique,
- « direction radiale » : direction coupant l'axe de rotation du pneumatique et perpendiculaire à celui-ci,
- « direction axiale » : direction parallèle à l'axe de rotation du pneumatique,
- « radialement intérieur à » : signifie plus proche de l'axe de rotation,
- « radialement extérieur à » : signifie plus éloigné de l'axe de rotation,
- « plan équatorial ou plan médian » : plan perpendiculaire à l'axe de rotation du pneumatique et qui divise le pneumatique en deux moitiés sensiblement égales,
- « direction transversale du pneumatique » : direction parallèle à l'axe de rotation,
- « plan radial ou méridien » : un plan qui contient l'axe de rotation du pneumatique.
   - Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).
   - Par « pneumatique », on entend tous les types de bandages élastiques soumis à une pression interne ou non.
   - Par « flanc d'un pneumatique », on entend une partie latérale du pneumatique disposée entre la bande de roulement du pneumatique et un talon de ce pneumatique.
   - Par « profil externe », on entend l'enveloppe externe virtuelle reliant les points les plus à l'extérieur des barrettes des deux flancs et dans laquelle les barrettes sont comprises.
   - Par « hauteur moyenne des barrettes », on entend la hauteur moyenne de l'ensemble des barrettes d'un flanc.
   - Par « ligne médiane de barrette » on entend une ligne virtuelle longitudinale traversant une barrette en passant sensiblement par son centre, de sorte que la barrette est subdivisée en deux parties sensiblement égales.
   - Par « pas », on entend une distance séparant deux barrettes consécutives, cette distance étant mesurée entre deux lignes médianes de barrettes consécutives, à des positions radiales sensiblement identiques.
   - Par « pas médian » on entend le pas mesuré sensiblement à mi-hauteur des barrettes.
   - Par « série de barrettes » on entend un ensemble comprenant au moins deux barrettes présentant des caractéristiques de pas identiques.
   - Par les termes « interrompt partiellement », on entend que l'extrémité radialement supérieure d'une barrette coupe partiellement le sillon circonférentiel.
   - Par les termes « interrompt totalement », on entend que l'extrémité radialement supérieure d'une barrette rejoint l'extrémité axialement extérieure de la bande de roulement qui lui est la plus proche.
   - Le « sillon » est une zone d'une largeur donnée située aux environs du point A, et présentant un taux de vide longitudinal supérieure à 70%.
   - Par le terme « régulier », on définit que les barrettes disposées entre les points A-E sont disposées à l'aplomb l'une de l'autre selon une direction radiale, avec éventuellement une symétrie, et de manière uniforme.
   - Par le terme « irrégulier », on définit que les barrettes disposées entre les points A-E sont disposées de manière décalée selon deux directions radiales parallèles sans symétrie et de manière non uniforme.
   - Le rayon R_{A} est fonction de la longueur L_{A}, elle-même fonction de la longueur L.
   - On définit la grosseur boudin nominale L par la grosseur boudin d'un pneumatique monté sur jante et gonflé ; la grosseur boudin étant, selon l'invention, la distance entre l'extérieur des flancs d'un pneumatique gonflé, en incorporant le relief de surface des flancs. R₁ correspond au rayon du point situé sur la surface extérieure du flanc le plus éloigné du plan médian.
   - REQ est le rayon au point le plus large du pneu (largeur = L) : R_{A} > REQ.

### DESCRIPTION DES FIGURES

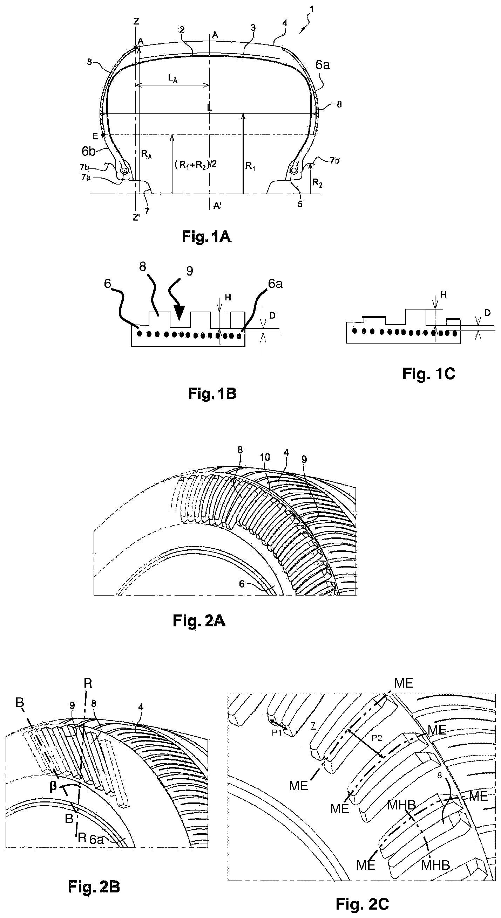

Comme le montre la figure 1A, le pneumatique pour véhicule de tourisme de référence générale 1 comprend une armature de carcasse 2 radialement intérieure à un renforcement de ceinture de référence générale 3, ledit renforcement de ceinture 3 étant radialement intérieur à une bande de roulement 4 elle-même reliée à deux bourrelets 5 par l'intermédiaire de deux flancs 6a et 6b. Les bourrelets 5 sont destinés à entrer en contact avec une jante 7 (partiellement représentée) ayant des hauts de crochet de jante 7b. Chaque bourrelet comprend au moins un élément de renforcement circonférentiel 7a. Les flancs comportent, sur leur surface, une série de barrettes 8 régulièrement alternées avec des creux 9 (montrés sur les figures 2A, 2B et 2C).

Sur la figure 1A on peut voir une barrette 8, en coupe, ayant une fibre neutre continue. On rappelle ici qu'on appelle une fibre neutre un axe neutre qui passe sensiblement au centre du volume de chaque barrette, et qui ne subit ni raccourcissement ni allongement lorsqu'il est soumis à une compression et/ou à une dépression.

Comme le montre la figure 1A, les barrettes 8 sont de préférence disposées à la surface du flanc, sur une longueur de fibre neutre continue qui s'étend d'un point A à un point E. Le point E peut être disposé selon deux intervalles.

L'intervalle I correspond à R₂ < E < (0,75 R₁ + 0,25R₂), R₂ étant le rayon du haut du crochet de jante et R₁ étant le rayon de la grosseur boudin nominal.

L'intervalle Il correspond à 0,95R₁ < E < (0,75R_{A} + 0,25 R₁), R₁ étant le rayon de la grosseur boudin nominal, et R_{A} étant le rayon du point A.

Selon un exemple de réalisation, le point E est disposé à un rayon de 232 mm pour un pneumatique de référence 205/55 R 16 monté sur jante 6.5 J 16 pour lequel R_{A} est égal à 298mm, R₂ est égal à 220mm et R₁ est égal à 261 mm.

La définition selon l'invention de la grosseur boudin est adaptable à tout type d'enveloppe combiné à tout type de jante.

Le point A est disposé à l'intersection de la surface radialement extérieure de la bande de roulement et du flanc, et d'un axe ZZ' distant du plan équatorial AA' d'une longueur L_{A} comprise entre ½ (L-60 mm) et ½ (L-10 mm), L étant la grosseur boudin nominale. Pour un pneumatique de référence 205/55 R 16, R_{A} est égal à 298mm.

Les barrettes ne sont pas des éléments de caoutchouc insérés ou ajoutés dans le caoutchouc des flancs, mais sont obtenues par moulage lors de l'étape de cuisson. Elles sont obtenues de manière similaire à celle des sculptures réalisées sur la bande de roulement.

La figure 1B montre que la présence des barrettes 8 de hauteur H permet en outre d'optimiser l'épaisseur du flanc : l'épaisseur « D » du flanc extérieur (en outre la zone située entre les barrettes) est supérieure à 0,1 mm et préférentiellement comprise entre 0,2 et 2mm, et encore plus préférentiellement entre 0,3 et 1,5 mm. Il est à noter que la valeur de D est indépendante du diamètre des câbles. Ces caractéristiques procurent une augmentation de la résistance des renforts de la nappe carcasse et donc de la robustesse du pneumatique face aux chocs et aux diverses agressions auxquelles les flancs sont susceptibles d'être soumis, sans compter les autres avantages (préalablement décrits) obtenus par les barrettes elles-mêmes.

Les barrettes 8 ont une hauteur comprise entre 3 mm et 10 mm, et plus préférentiellement entre 4 mm et 8 mm. Un des modes de réalisation de l'invention prévoit que la hauteur H des barrettes du premier flanc 6a diffère de la hauteur H des barrettes du second flanc 6b. La hauteur des barrettes 8 du premier flanc 6a diffère d'au moins 10% et au plus de 50% et plus préférentiellement d'au moins 20% et au plus de 35% de la hauteur des barrettes 8 du second flanc 6b.

La figure 1C illustre un mode avantageux de réalisation dans lequel la hauteur H des barrettes varie le long de la circonférence d'un flanc. L'amplitude des variations peut alors être comparable aux amplitudes préalablement indiquées lorsque la hauteur varie d'un flanc à l'autre. On peut ainsi retrouver des barrettes de hauteurs différentes soit en alternance une par une, comme illustré dans l'exemple de la figure 1C, ou selon tout autre type de répartition des barrettes de hauteurs différentes. En outre, il peut y avoir plus de deux hauteurs H de barrettes.

La hauteur H est avantageusement la hauteur moyenne, telle que préalablement définie. Pour effectuer les mesures de valeur de hauteur, on utilise de préférence un point de mesure de référence pour l'ensemble des barrettes, de façon à effectuer les mesures de façon uniforme sur chacune des barrettes. On fait ensuite la moyenne des valeurs obtenues pour l'ensemble des barrettes. La figure 2C illustre un exemple permettant de déterminer un point de référence, en utilisant l'intersection des lignes médianes (ou de fibre neutre) ME-ME et de mi-hauteur des barrettes MHB-MHB.

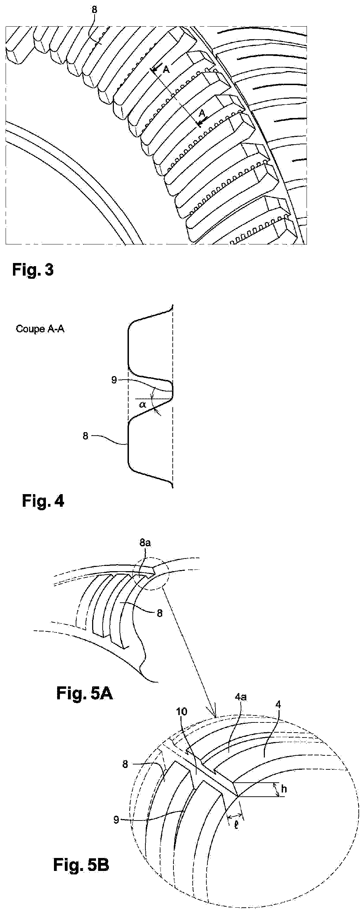

La figure 2A représente une alternance de barrettes 8 et de creux 9, représentée de manière agrandie sur les figures 3 et 4.

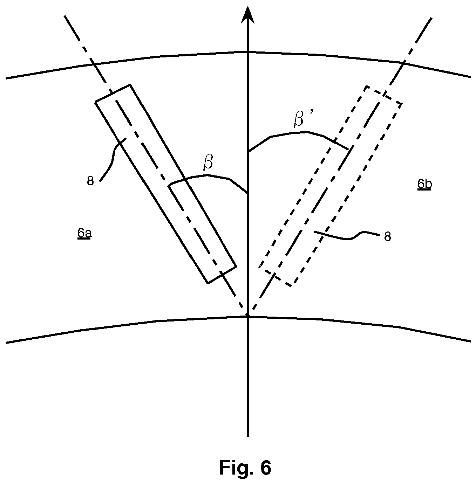

La figure 2B représente une variante de la figure 2A où les barrettes sont disposées selon un angle **β** par rapport à la direction radiale, représentée sur la figure par l'axe R-R. Selon un mode de réalisation préférentiel de l'invention, l'angle d'inclinaison **β** des barrettes du 1^{er} flanc est différent de l'angle d'inclinaison **β** des barrettes du second flanc. La figure 6 illustre schématiquement ce mode de réalisation. On observe à gauche de la figure, une barrette 8 d'un premier flanc 6a agencée selon un angle **β**. La portion de droite de la figure montre en pointillé ce que l'on pourrait apercevoir en transparence sur le flanc opposé 6b. Une barrette illustrée en pointillé est ainsi inclinée selon angle sensiblement opposé **β**'.

Par ailleurs, dans une variante de réalisation, au moins deux barrettes 8 d'un même flanc ont une orientation radiale différente. L'angle **β** est avantageusement compris entre 10° et 50°, et préférentiellement entre 20° et 30°.

La figure 2C illustre un mode préférentiel dans lequel les barrettes 8 sont organisées dans la circonférence du pneumatique 1 en au moins deux séries de barrettes de pas P1 et P2 différents. L'écart entre les valeurs de pas P1 et P2 est d'au moins 5%, et préférentiellement supérieur à 20%, et plus préférentiellement compris entre 25 % et 50 %. Cet écart résulte préférablement d'une différence de largeur des barrettes, ou d'une différence de largeur entre les barrettes. Toutefois, une des solutions préférentielles implique une variation de ces deux paramètres simultanément, de préférence en faisant en sorte que le que le taux d'entaillement volumique (TEV) soit constant. Cette caractéristique permet de faire des pneumatiques uniformes, ne générant pas de variation de raideur radiale pendant le roulage. Selon une autre variante, les séries de barrettes 8 comprennent aux moins trois valeurs différentes de pas. Encore en variante, chaque flanc 6a et 6b du pneumatique comporte une série de barrettes, le pas P1 et P2 des séries de barrettes de chaque flanc étant différent. Les mesures des valeurs de pas sont de préférence effectuées entre les lignes médianes (ou de fibre neutre) ME-ME de deux barrettes adjacentes. On utilise de préférence le pas médian, c'est-à-dire le pas mesuré à mi-hauteur des barrettes. La position de mi-hauteur des barrettes est illustrée à la figure 2C, par la ligne MHB-MHB.

La figure 4 illustre un exemple de profil des barrettes. Dans cet exemple, l'angle de dépouille α est d'environ 8°. Une telle valeur d'angle de dépouille permet un démoulage du pneumatique après cuisson sans détérioration de la structure finale.

Selon ce mode de réalisation, les barrettes présentent un rapport [somme des largeurs de chaque barrette dans la direction circonférentielle sur un rayon R₁] / 2πR égale à 30%, à mi-hauteur et ne présentent aucun angle par rapport au plan radial.

La figure 5A montre une représentation en trois dimensions de la partie radialement extérieure 8a des barrettes 8 et son agrandissement sur la figure 5B de la figure 5A. Sur ces figures 5A et 5B, la partie 8a de chaque barrette 8 ainsi que les creux 9 sont adjacents à un sillon 10 disposé, de manière circonférentielle, sur la surface de la bande de roulement 4 à son extrémité axialement la plus extérieure 4a. Le sillon 10 n'est pas interrompu dans sa longueur. Selon ce mode particulier de réalisation, le sillon 10 a une largeur axiale « I » selon l'axe YY' pouvant être comprise entre 2 et 10mm, et une hauteur radiale « h » selon l'axe ZZ' comprise entre 3 et 8mm.

Le pneumatique selon l'invention est obtenu après cuisson et moulage dans un moule de cuisson de manière classique.

### Numéros de référence employés sur les figures

- 1: Pneumatique
- 2: Armature de carcasse
- 3: Renforcement de ceinture
- 4: Bande de roulement
- 4a: Extrémité axialement la plus extérieure de la bande de roulement
- 5: Bourrelets
- 6a: Premier Flanc
- 6b: Second flanc
- 7a: Elément de renforcement circonférentiel
- 7b: Haut de crochet de jante
- 8: Barrette
- 8a: Extrémité de barrette
- 9: Creux
- 10: Sillon circonférentiel

## Revendications

1. Pneumatique (1) en matériau caoutchoutique comprenant une bande de roulement (4), un premier flanc (6a) et un second flanc (6b) prolongeant ladite bande de roulement (4) selon un profil externe de flanc, les flancs (6a, 6b) comportant une pluralité de zones de creux (9) séparées par des barrettes (8) en matériau caoutchoutique, les barrettes et les creux étant disposés les uns à la suite des autres dans la circonférence du pneumatique (1), lesdites barrettes (8) ne dépassant pas le profil externe de flanc, lesdites barrettes (8) ayant au moins une hauteur de 3 mm et au plus de 10 mm, **caractérisé en ce que** la hauteur de tout ou partie des barrettes (8) du premier flanc (6a) est différente de la hauteur de tout ou partie des barrettes (8) du second flanc (6b) ou la hauteur moyenne de tout ou partie des barrettes (8) du premier flanc (6a) est différente de la hauteur moyenne de tout ou partie des barrettes (8) du second flanc (6b).

2. Pneumatique selon la revendication 1, **caractérisé en ce que** la hauteur ou hauteur moyenne des barrettes (8) du premier flanc (6a) diffère d'au moins 10% et au plus de 50% et plus préférentiellement d'au moins 20% et au plus de 35% de la hauteur ou hauteur moyenne des barrettes (8) du second flanc (6b).

3. Pneumatique selon l'une des revendications 1 ou 2, **caractérisé en ce que** lesdites barrettes (8) ont une hauteur ou hauteur moyenne comprise en 4 mm et 8 mm.

4. Pneumatique selon l'une quelconque des revendications 1 à 3, **caractérisé en ce que,** la bande de roulement comprenant une pluralité de motifs agencés circonférentiellement, le nombre de motifs par tour de ladite bande de roulement (4) est différent du nombre de barrettes (8) d'au moins un des flancs.

5. Pneumatique selon l'une quelconque des revendications 1 à 4, **caractérisé en ce qu'au** moins deux barrettes (8) d'un même flanc ont une hauteur ou hauteur moyenne différente.

6. Pneumatique selon l'une quelconque des revendications 1 à 5, **caractérisé en ce que** les barrettes (8) présentent une inclinaison par rapport à une direction radiale (Z).

7. Pneumatique selon la revendication 6, **caractérisé en ce que** l'inclinaison des barrettes (8) est différente d'un flanc à l'autre.

8. Pneumatique selon l'une quelconque des revendications 1 à 7, **caractérisé en ce que** les barrettes (8) sont organisées dans la circonférence du pneumatique (1) en au moins deux séries de barrettes, au moins deux séries de barrettes (8) comprenant au moins deux pas (P1, P2) différents.

9. Pneumatique selon l'une quelconque des revendications 1 à 8, **caractérisé en ce que** les barrettes (8) sont disposées entre un point A et un point E,
- ledit point A étant disposé à l'intersection de la surface radialement extérieure de la bande de roulement et du flanc, et d'un axe radial ZZ' distant du plan équatorial d'une longueur L_{A} comprise entre ½ (L-60mm) et ½ (L-10mm), L étant la grosseur boudin nominale, et
- ledit point E étant disposé, au choix, dans un rayon compris dans :
∘ R₂ < E < (0,75 R₁ + 0,25R₂), R₂ étant le rayon du haut du crochet de jante et R₁ étant le rayon de la grosseur boudin nominal, ou dans
∘ 0,95R₁ < E < (0,75R_{A} + 0,25 R₁), R₁ étant le rayon de la grosseur boudin nominal, et R_{A} étant le rayon du point A.

10. Pneumatique selon l'une quelconque des revendications 1 à 9, **caractérisé en ce que** tout ou partie des barrettes (8) est interrompue par un sillon circonférentiel (10) et **en ce que** ledit sillon (10) s'étend entre une zone de largeur maximale du flanc et la bande de roulement (4).

11. Ensemble monté comprenant une jante et un pneumatique tels que définis selon l'une quelconque des revendications 1 à 10.

## Patentansprüche

1. Reifen (1) aus Gummimaterial, umfassend eine Lauffläche (4), eine erste Seitenwand (6a) und eine zweite Seitenwand (6b), die die Lauffläche (4) entlang eines äußeren Seitenwandprofils erstreckt, wobei die Seitenwände (6a, 6b)) mehrere Hohlräume (9) umfassen, die durch Stangen (8) aus Gummimaterial getrennt sind, wobei die Stangen und die Hohlräume nacheinander im Umfang des Reifens (1) angeordnet sind, wobei die Stangen (8) wobei das äußere Profil der Seite nicht überschritten wird, wobei die Stangen (8) mindestens eine Höhe von 3 mm und höchstens 10 mm aufweisen, **dadurch gekennzeichnet, dass** die Höhe aller oder eines Teils der Stangen (8) der ersten Seitenwand (6a) unterscheidet sich von der Höhe aller oder eines Teils der Stangen (8) der zweiten Seitenwand (6b) oder der durchschnittlichen Höhe aller oder eines Teils der Stangen (8) der ersten Seitenwand (6a) von der durchschnittlichen Höhe aller oder eines Teils der Stangen (8) der zweiten Seitenwand (6b).

2. Reifen nach Anspruch 1, **dadurch gekennzeichnet, dass** sich die Höhe oder Durchschnittshöhe der Stangen (8) der ersten Seitenwand (6a) um mindestens 10% und höchstens 50% und bevorzugter um mindestens 20% und bei unterscheidet mehr als 35% der Höhe oder Durchschnittshöhe der Stangen (8) der zweiten Flanke (6b).

3. Reifen nach einem der Ansprüche 1 oder 2, **dadurch gekennzeichnet, dass** die Stangen (8) eine durchschnittliche Höhe oder Höhe zwischen 4 mm und 8 mm aufweisen.

4. Reifen nach einem der Ansprüche 1 bis 3, **dadurch gekennzeichnet, dass** die Lauffläche, die mehrere in Umfangsrichtung angeordnete Muster umfasst, die Anzahl der Muster pro Umdrehung der Lauffläche (4) von der Anzahl der Stangen (8) mindestens eine der Seitenwände.

5. Reifen nach einem der Ansprüche 1 bis 4, **gekennzeichnet dadurch, dass** mindestens zwei Stangen (8) derselben Seitenwand eine unterschiedliche Höhe oder durchschnittliche Höhe haben.

6. Reifen nach einem der Ansprüche 1 bis 5, **dadurch gekennzeichnet, dass** die Stangen (8) eine Neigung in Bezug auf eine radiale Richtung (Z) aufweisen.

7. Reifen nach Anspruch 6, **dadurch gekennzeichnet, dass** sich die Neigung der Stangen (8) von einer Seitenwand zur anderen unterscheidet.

8. Reifen nach einem der Ansprüche 1 bis 7, **dadurch gekennzeichnet, dass** die Stangen (8) in mindestens zwei Stangenserien um den Umfang des Reifens (1) angeordnet sind, wobei mindestens zwei Stangenserien (8) umfassen mindestens zwei verschiedene Schritte (P1, P2).

9. Reifen nach einem der Ansprüche 1 bis 8, **dadurch gekennzeichnet, dass** die Stangen (8) zwischen einem Punkt A und einem Punkt E angeordnet sind, wobei
• der Punkt A am Schnittpunkt der radialen Außenfläche der Lauffläche und der Seitenwand und einer radialen Achse ZZ 'angeordnet ist, die um eine Länge L von der Äquatorialebene entfernt ist BEIM zwischen ½ (L-60 mm) und ½ (L-10 mm), wobei L die nominelle Reifenbreite ist, und
• wobei der Punkt E nach Wunsch innerhalb eines Radius angeordnet ist, der enthalten ist in:
∘ R₂ <E <(0.75 R₁ + 0.25R₂), wobei R₂ der Radius der Oberseite des Felgenhakens und R₁ der Radius der nominellen Reifenbreite, oder in
∘ 0.95R₁ <E <(0.75R_{A} + 0.25 R₁), wobei R₁ der Radius der nominellen Reifenbreite ist und R_{A} der Radius von Punkt A.

10. Reifen nach einem der Ansprüche 1 bis 9, **dadurch gekennzeichnet, dass** alle oder ein Teil der Stangen (8) durch eine Umfangsnut (10) unterbrochen sind und sich die Umfangsnut (10) zwischen einer Zone der maximale Reifenbreite im Seitenwand und der Lauffläche (4) erstreckt.

11. Montierte Baugruppe, umfassend eine Felge und einen Reifen nach einem der Ansprüche 1 bis 10.

## Claims

1. A tire (1) made of rubber material comprising a tread (4), a first sidewall (6a) and a second sidewall (6b) extending said tread (4) along an external sidewall profile, the sidewalls (6a, 6b)) comprising a plurality of hollow areas (9) separated by bars (8) of rubber material, the bars and the hollows being arranged one after the other in the circumference of the tire (1), said bars (8) not exceeding the external profile of the sidewall, said bars (8) having at least a height of 3 mm and at most 10 mm, **characterized in that** the height of all or part of the bars (8) of the first sidewall (6a) is different from the height of all or part of the bars (8) of the second sidewall (6b) or the average height of all or part of the bars (8) of the first sidewall (6a) is different from the average height of all or part of the bars (8) of the second sidewall (6b).

2. Tire according to Claim 1, **characterized in that** the height or average height of the bars (8) of the first sidewall (6a) differs by at least 10% and at most 50% and more preferably by at least 20% and at most 35% of the height or average height of the bars (8) of the second sidewall (6b).

3. Tire according to one of Claims 1 or 2, **characterized in that** the said bars (8) have an average height or height of between 4 mm and 8 mm.

4. Tire according to any one of claims 1 to 3, **characterized in that**, the tread comprising a plurality of patterns arranged circumferentially, the number of patterns per revolution of said tread (4) is different from the number of bars (8) on at least one of the sidewalls.

5. Tire according to any one of Claims 1 to 4, **characterized in that** at least two bars (8) of the same sidewall have a different height or average height.

6. Tire according to any one of Claims 1 to 5, **characterized in that** the bars (8) have an inclination with respect to a radial direction (Z).

7. A tire according to claim 6, **characterized in that** the inclination of the bars (8) is different from one sidewall to the other.

8. Tire according to any one of claims 1 to 7, **characterized in that** the bars (8) are organized around the circumference of the tire (1) in at least two series of bars, at least two series of bars (8) comprising at least two different pitches (P1, P2).

9. Tire according to any one of Claims 1 to 8, **characterized in that** the bars (8) are arranged between a point A and a point E,
• said point A being disposed at the intersection of the radially outer surface of the tread and of the sidewall, and of a radial axis ZZ' distant from the equatorial plane by a length L_{A} between ½ (L-60mm) and ½ (L- 10mm), L being the nominal tire width, and
• said point E being arranged, as desired, within a radius included in:
∘ R₂ <E <(0.75 R₁ + 0.25R₂), R₂ being the radius of the top of the rim hook and R₁ being the radius of the nominal tire width, or in
∘ 0.95R₁ <E <(0.75R_{A} + 0.25 R₁), R₁ being the radius of the nominal tire width, and R_{A} being the radius of point A.

10. Tire according to any one of Claims 1 to 9, **characterized in that** all or part of the bars (8) is interrupted by a circumferential groove (10) and **in that** said groove (10) extends between a zone of maximum width sidewall and the tread (4).

11. Mounted assembly comprising a rim and a tire according to any one of claims 1 to 10.
